# EUROPEAN PATENT APPLICATION

(11) **EP 2 458 918 A1**
(43) Date of publication of application: **30.05.2012**
(21) Application number: 10801878.9
(22) Date of filing: 30.04.2010
(51) Int. Cl.: H04W 40/20

(54) **METHOD AND APPARATUS FOR TRANSMITTING LOCATION INFORMATION**

(30) Priority: 20.07.2009 CN 200910160114
(71) Applicant: ZTE Corporation, Shenzhen, Guangdong 518057 (CN)
(72) Inventor: WU, Hao, Shenzhen Guangdong 518057 (CN)
(74) Representative: Manitz, Gerhart
(86) International application number: PCT/CN2010/072377
(87) International publication number: WO 2011/009318

(57) **Abstract**

A method and an apparatus for transmitting location information are provided. The method includes: the base station transmits the location information of the user terminal or the location information of the base station to the serving mobile location center (SMLC) during the process of locating the user terminal. The apparatus includes: a location unit used to locate the user terminal; a transmission unit used to transmit the location information of the user terminal determined by the location unit or the location information of the base station to the serving mobile location center (SMLC).

## Description

### Technical Field

The present invention relates to the positioning technology of user equipment (UE) of terminals, and particularly, to a method and apparatus for sending positioning information.

### Background of the Related Art

In the current positioning protocols, the UE positioning method based on evolved cell identifier (E-CID) is supported. The method is as follows: the location information of UE is estimated by way of the UE or an eNode B measuring the downlink or uplink wireless signal in combination with the identifier of the cell where the UE is located. At the same time, the positioning method based on E-CID also supports the approaches based on UE and based on eNode B, wherein the approach based on UE refers that the UE per se calculates its location information according to information such as the measurement result and the identifier of the eNode B and so on, then feeds back the location information to a serving mobile location center (SMLC) in the network; and the approach based on eNode B refers that the eNode B calculates the location information of the UE according to information such as the measurement result and its own identifier and so on and feeds back the location information to the SMLC.

In the existing technology, the information sent by the eNode B to the SMLC includes the timing advance information of the UE, the angle when the uplink signal of the UE arrives at the eNode B, and the measurement result of the uplink signal of the UE. However, if the approach based on eNode B is used, the existing protocols do not support that the location information of the UE is reported to the SMLC, which is equivalent to not supporting the positioning of the UE implemented by the eNode B.

### Summary of the Invention

In view of this, the main purpose of the present invention is to provide a method and apparatus for sending positioning information so as to accurately position the UE by eNode B and report the location information to the network side.

In order to achieve the above purpose, the technical solution of the present invention is achieved as follows:
A method for sending positioning information comprises:
   an eNode B sending location information of user equipment or location information of the eNode B to a serving mobile location center (SMLC) during positioning the user equipment.

Preferably, the step of positioning the user equipment comprises:
measuring an uplink wireless signal of the user equipment, and measurement items including at least one of carrier signal strength indicator, reference signal received power and reference signal received quality; and
determining the location information of the user equipment according to a measurement result and geographical location information of the eNode B.

Preferably, the location information of the user equipment or the location information of the eNode B is carried in the positioning information between the eNode B and the SMLC.

Preferably, the positioning information comprises timing advance information of the user equipment, an angle of arrival and the measurement result of uplink signal of the user equipment.

Preferably, when the location information of the user equipment is carried in the positioning information, network elements where the timing advance information of the user equipment, the angle of arrival and the measurement result of the uplink signal of the user equipment in the positioning information are located are null.

Preferably, the location information of the user equipment or the location information of the eNode B is carried in specific information which is newly set.

Preferably, when the location information of the user equipment is carried in the specific information which is newly set, the eNode B will no longer transmit positioning information to the SMLC or the transmitted positioning information is null.

An apparatus for sending positioning information comprises:
a positioning unit configured to position user equipment; and
a transmitting unit configured to transmit location information of the user equipment or location information of eNode B determined by the positioning unit to a serving mobile location center (SMLC).

Preferably, the positioning unit includes:
a measurement module configured to measure an uplink wireless signal of the user equipment, with measurement items including at least one of carrier signal strength indicator, reference signal received power and reference signal received quality; and
a location determination module configured to determine the location information of the user equipment according to a measurement result of the measurement module and geographical location information of the eNode B to which the user equipment currently belongs.

Preferably, the transmitting unit includes the location information of the user equipment or the location information of the eNode B in the positioning information between the eNode B to which the user equipment belongs and the SMLC.

Preferably, when the location information of the user equipment is carried in the positioning information, network elements where timing advance information of the user equipment, an angle of arrival and the measurement result of uplink signal of the user equipment in the positioning information are located are null.

Preferably, the transmitting unit includes the location information of the user equipment or the location information of the eNode B in specific information which is newly set.

Preferably, when the location information of the user equipment is carried in the specific information which is newly set, the transmitting unit will no longer transmit positioning information to the SMLC or the transmitted positioning information is null.

In the present invention, by way of extending the positioning information between the eNode B and the SMLC and adding an network element carrying the location information of the UE or the location information of the eNode B, the eNode B can also report the location information of the UE or its own location information to the SMLC, thereby achieving the positioning of the UE by the eNode B. The present invention is a remedy for the existing UE positioning approach, and its implementation is simple and applicable.

### Brief Description of Drawings

Fig. 1 is a flowchart of method for sending positioning information according to the present invention;
Fig. 2 is a schematic diagram of composition structure of apparatus for sending positioning information according to the present invention;
Fig. 3 is a schematic diagram of the composition structure of a positioning unit according to the present invention.

### Preferred Embodiments of the Present Invention

The basic concept of the present invention is: by way of extending the positioning information between the eNode B and the SMLC and adding an network element carrying the location information of the UE or the location information of the eNode B, the eNode B can also report the location information of the UE or its own location information to the SMLC, thereby achieving the positioning of the UE by the eNode B. The present invention is a remedy for the existing UE positioning approach, and it utilizes the existing positioning information to send the location information of the UE, and the implementation thereof is simple and applicable.

In order to make the purpose, technical solution and advantages of the present invention more clear, the present invention will be further described in detail by way of embodiments with reference to the accompanying drawings.
Step 101: the SMLC decides to position the UE by using the uplink E-CID positioning method and to adopt the approach based on eNode B.
Step 102: the SMLC sends a positioning request to the eNode B. The eNode B here is an eNode B currently serving the UE.
Step 103: after receiving the positioning request of the SMLC, the eNode B measures an uplink wireless signal of the UE. The measurement items include at least one of carrier signal strength indicator, reference signal received power and reference signal received quality. The above measurement items are completed by the corresponding measurement unit in the eNode B.
Step 104: after obtaining the measurement result of the wireless signal of UE, the eNode B calculates the location information of the UE according to the measurement result and its own geographical location information. In particular, the eNode B determines the distance from the UE to the eNode B according to the angle of arrival of the uplink signal of the UE (i.e. direction of arrival of the UE), cell identifier information of the current serving cell of the UE and the channel quality indication of the uplink signal of the UE or received power of reference signal or received quality of reference signal, and its principle is: the farther the UE is away from the eNode B, the weaker the signal strength of the uplink signal is, and the location information of the UE can be determined by way of relevant information of the signal strength of the uplink signal. The cell identifier information of the serving cell of the UE includes evolved cell global identifier (ECGI) or physical cell ID information.
Step 105: the eNode B sends the location information of the UE to the SMLC. In particular, the eNode B includes the location information of the UE in the positioning information between the eNode B and the SMLC, however, a network element carrying the location information of the UE is not set before the positioning information; in the present invention, the positioning information is extended and a network element carrying the location information of the UE is added, as shown in Tables 1 and 2, in which the italic portion "UE location information" and "eNode B location information" are network elements newly added in the positioning information. The UE location information includes latitude, longitude and altitude information and so on, and it is determined by the eNode B according to the above mentioned measurement result. The eNode B location information includes information such as geographical coordinate and so on, and the location information of the eNode B determines the location information thereof when setting the eNode B, and it can be obtained by way of the configuration information of the eNode B. The positioning information further includes the timing advance (TA) information and angle of arrival (AoA) of wireless signal of UE, and it further includes the measurement result information of the wireless signal of UE (E-UTRA Measurement Result List), which includes ECGI or physical cell ID information, carrier received signal strength indicator (RSSI), reference signal received power (RSRP) and reference signal received quality (RSRQ).

**Table 1**

| **Information** | |
|---|---|
| *UE location information(e.g. Latitude*/*Longitude*/*Altitude, together with uncertainty shape)* | |
| Timing Advance (TA) | |
| Angle of Arrival (AoA) | |
| E-UTRA Measurement Result List: | |
| | - Evolved Cell Global Identifier (ECGI) /Physical Cell ID |
| | - E-UTRA carrier RSSI |
| | - Reference Signal Received Power (RSRP) |
| | - Reference Signal Received Quality (RSRQ) |

**Table 2**

| **Information** | |
|---|---|
| *eNode B location information(e.g. geographical coordinate)* | |
| Timing Advance (TA) | |
| Angle of Arrival (AoA) | |
| E-UTRA Measurement Result List: | |
| | - Evolved Cell Global Identifier (ECGI) /Physical Cell ID |
| | - E-UTRA carrier RSSI |
| | - Reference signal received power (RSRP) |
| | - Reference Signal Received Quality (RSRQ) |

In the present invention, the location information of the UE can also be included in the following information structures, as shown in Table 3:

**Table 3**

| **Information** | | **eNB based** | **SMLC based** |
|---|---|---|---|
| *UE location information(e.g. LatitudelLongitudelAltitude, together with uncertainty shape)* | | Yes | No |
| *eNode B location information(e.g. geographical coordinate)* | | No | Yes |
| Timing Advance (TA) | | no | Yes |
| Angle of Arrival (AoA) | | No | Yes |
| E-UTRA Measurement Results List: | | No | Yes |
| | - Evolved Cell Global Identifier (ECGI) /Physical Cell ID | No | Yes |
| | - E-UTRA carrier RSSI | No | Yes |
| | - Reference signal received power (RSRP) | No | Yes |
| | - Reference Signal Received Quality (RSRQ) | No | Yes |

The information structure in Table 3 means that if the UE positioning approach based on eNode B is used, the eNode B only sends the location information of the UE, and other information such as the measurement result of the uplink signal and so on may no longer be sent; when the eNode B sends the location information of the eNode B but does not send the location information of the UE, other information in the original positioning information also needs to be sent to the SMLC, because the determination of the UE location information cannot be implemented only by the location information of the eNode B, and other information is also needed, such that the accurate location information of the UE can be determined.

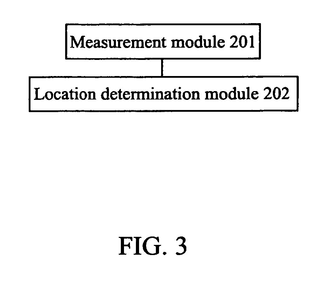

It needs to be noted that the location information of the UE can also be carried by way of a new information format which is specially set, i.e. information is newly set between the eNode B and the SMLC to transmit the location information of the UE, and the original positioning information in the system is still sent normally. In this way, as the information structure shown in Fig. 3, when the location information of the UE is carried in the specific information which is newly set, the information in each network element in the original positioning information can be null, i.e. any information in the original positioning information will no longer be sent. If the location information of the eNode B is carried in the specific information which is newly set, the original positioning information has to be sent and the information of each network element therein has to be carried.

It needs to be noted that the UE location information and the eNode B location information in the present invention can be sent to the SMLC simultaneously, and the UE location information is finally determine.

The present invention is a remedy for the existing UE positioning approach, in which the existing positioning information or newly set specific information is utilized to send the location information of the UE, and the implementation thereof is simple and applicable.

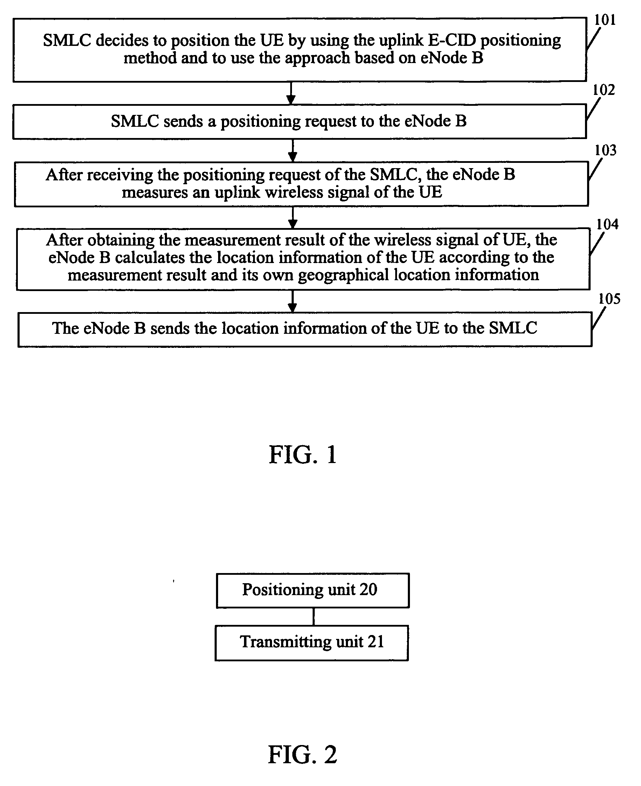

Fig. 2 is a schematic diagram of the composition structure of an apparatus for sending positioning information according to the present invention; as shown in Fig. 2, the apparatus for sending positioning information according to the present invention includes a positioning unit 20 and a transmitting unit 21, wherein the positioning unit 20 is configured to position user equipment; and the transmitting unit 21 is configured to send the location information of the user equipment or the location information of an eNode B determined by the positioning unit 20 to an SMLC. The transmitting unit 21 includes the location information of the user equipment or the location information of the eNode B in the positioning information between the eNode B to which the user equipment belongs and the SMLC, and the location information of the user equipment or the location information of the eNode B to which the user equipment belongs are used as newly set network elements of the positioning information. When the location information of the user equipment is carried in the positioning information, the network elements where the timing advance information of the user equipment, the angle of arrival and measurement result of the uplink signal of the user equipment in the positioning information are located are null. The transmitting unit 21 carries the location information of the user equipment or the location information of the eNode B in the specific information which is newly set. When the location information of the user equipment is carried in the specific information which is newly set, the transmitting unit will no longer transmit positioning information to the SMLC or the transmitted positioning information is null.

Fig. 3 is a schematic diagram of the composition structure of a positioning unit according to the present invention; as shown in Fig. 3, the positioning unit 20 in the present invention includes: a measurement module 201 and a location determination module 202, wherein the measurement module 201 is configured to measure an uplink wireless signal of the user equipment, with the measurement items including at least one of carrier signal strength indicator, reference signal received power and reference signal received quality; and the location determination module 202 is configured to determine the location information of the user equipment according to the measurement result of the measurement module 201 and the geographical location information of the eNode B to which the user equipment currently belongs.

Those skilled in the art shall understand that the apparatus for sending positioning information shown in Fig. 2 is provided for implementing the above mentioned method for sending positioning information, and the functions of the units and modules in the apparatus shown in Figs. 2 and 3 can be implemented by way of programs running in a processor or by a specific logic circuit.

What is described above is merely preferred embodiments of the present invention and not intended to limit the protection scope of the present invention.

## Claims

1. A method for sending positioning information, comprising:
an eNode B sending location information of user equipment or location information of the eNode B to a serving mobile location center (SMLC) during positioning the user equipment.

2. The method according to claim 1, wherein the step of positioning the user equipment is:
measuring an uplink wireless signal of the user equipment, and measurement items including at least one of carrier signal strength indicator, reference signal received power and reference signal received quality; and
determining the location information of the user equipment according to a measurement result and geographical location information of the eNode B.

3. The method according to claim 1 or 2, wherein the location information of the user equipment or the location information of the eNode B is carried in positioning information between the eNode B and the SMLC.

4. The method according to claim 3, wherein the positioning information comprises timing advance information of the user equipment, an angle of arrival and the measurement result of uplink signal of the user equipment.

5. The method according to claim 4, wherein when the location information of the user equipment is carried in the positioning information, network elements where the timing advance information of the user equipment, the angle of arrival and the measurement result of the uplink signal of the user equipment in the positioning information are located are null.

6. The method according to claim 1 or 2, wherein the location information of the user equipment or the location information of the eNode B is carried in specific information which is newly set.

7. The method according to claim 5, wherein when the location information of the user equipment is carried in the specific information which is newly set, the eNode B will no longer transmit positioning information to the SMLC or the transmitted positioning information is null.

8. An apparatus for sending positioning information, comprising a positioning unit and a transmitting unit, wherein
the positioning unit is configured to position user equipment;
the transmitting unit is configured to transmit location information of the user equipment or location information of eNode B determined by the positioning unit to a serving mobile location center (SMLC).

9. The apparatus according to claim 8, wherein the positioning unit comprises a measurement module and a location determination module, wherein
the measurement module is configured to measure an uplink wireless signal of the user equipment, with measurement items including at least one of carrier signal strength indicator, reference signal received power and reference signal received quality;
the location determination module is configured to determine the location information of the user equipment according to a measurement result of the measurement module and geographical location information of the eNode B to which the user equipment currently belongs.

10. The apparatus according to claim 8 or 9, wherein the transmitting unit further includes the location information of the user equipment or the location information of the eNode B in positioning information between the eNode B to which the user equipment belongs and the SMLC.

11. The apparatus according to claim 10, wherein when the location information of the user equipment is carried in the positioning information, network elements where timing advance information of the user equipment, an angle of arrival and the measurement result of uplink signal of the user equipment in the positioning information are located are null.

12. The apparatus according to claim 8 or 9, wherein the transmitting unit further includes the location information of the user equipment or the location information of the eNode B in specific information which is newly set.

13. The apparatus according to claim 12, wherein when the location information of the user equipment is carried in the specific information which is newly set, the transmitting unit will no longer transmit positioning information to the SMLC or the transmitted positioning information is null.
